# EUROPEAN PATENT APPLICATION

(11) **EP 4 459 938 A1**
(43) Date of publication of application: **06.11.2024**
(21) Application number: 23766013.9
(22) Date of filing: 07.03.2023
(51) Int. Cl.: H04L 41/04

(54) **KNOWLEDGE UPDATING METHOD AND COMMUNICATION APPARATUS**

(30) Priority: 08.03.2022 CN 202210227347
(71) Applicant: Huawei Technologies Co., Ltd., Shenzhen, Guangdong 518129 (CN)
(72) Inventor: WANG, Chujie, Shenzhen, Guangdong 518129 (CN); LI, Xianming, Shenzhen, Guangdong 518129 (CN)
(74) Representative: Goddar, Heinz J.
(86) International application number: PCT/CN2023/080147
(87) International publication number: WO 2023/169435

(57) **Abstract**

A knowledge update method is provided. The method includes: A knowledge provision network element sends knowledge information to a network management network element, where the knowledge information indicates quality of intent knowledge of a first intent operation. The knowledge provision network element receives policy information from the network management network element, where the policy information indicates a manner of updating the intent knowledge. The knowledge provision network element updates the intent knowledge based on the policy information. In this way, the knowledge provision network element can feed back the quality of the intent knowledge to the network management network element, the network management network element can deliver the manner of updating the intent knowledge to the knowledge provision network element based on the quality, and the knowledge provision network element can perform updating based on the policy information in a subsequent intent knowledge update procedure, to improve quality of updated knowledge.

## Description

This application claims priority to Chinese Patent Application No. 202210227347.4, filed with the China National Intellectual Property Administration on March 8, 2022 and entitled "KNOWLEDGE UPDATE METHOD AND COMMUNICATION APPARATUS", which is incorporated herein by reference in its entirety.

### TECHNICAL FIELD

This application relates to the field of communication technologies, and more specifically, to a knowledge update method and a communication apparatus.

### BACKGROUND

Currently, users can do automation work with a cognitive network management system. The cognitive network management system may include a knowledge provision network element, a knowledge consumption network element, and a network management network element. The network management network element may deliver an intent to the knowledge consumption network element, to meet an expectation for an action system, for example, to make a performance indicator of the action system reach a threshold. The knowledge consumption network element may generate at least one intent operation based on intent knowledge provided by the knowledge provision network element, and deliver the at least one intent operation to at least one network device for execution. In a process in which the network device executes the intent operation, the knowledge consumption network element may obtain a change value of a performance indicator of the network device, so that the knowledge provision network element can update the intent knowledge of the intent operation based on the change value. In this way, in a subsequent intent execution procedure, the system can determine an appropriate intent operation based on updated intent knowledge.

However, if quality of the intent knowledge updated by the knowledge provision network element is low, the system may execute an inappropriate intent operation based on the low-quality intent knowledge in the subsequent intent execution procedure, and consequently cannot normally execute the intent to meet the expectation for the action system.

### SUMMARY

This application provides a knowledge update method and a communication apparatus, to improve quality of updated knowledge.

According to a first aspect, a knowledge update method is provided. The method may be executed by a knowledge provision network element or a chip in the knowledge provision network element. The method includes: The knowledge provision network element sends knowledge information to a network management network element, where the knowledge information indicates quality of intent knowledge of a first intent operation. The knowledge provision network element receives policy information from the network management network element, where the policy information indicates a manner of updating the intent knowledge. The knowledge provision network element updates the intent knowledge based on the policy information.

In this way, in this application, the knowledge provision network element may feed back the quality of the intent knowledge to the network management network element, the network management network element may deliver, to the knowledge provision network element based on the quality, the manner of updating the intent knowledge, and the knowledge provision network element may perform updating based on the policy information in a subsequent intent knowledge update procedure, to improve quality of updated knowledge.

With reference to the first aspect, in some implementations of the first aspect, the method further includes: The knowledge provision network element obtains performance evaluation information, where the performance evaluation information indicates a change value of a performance indicator of at least one target network device in a target time period, and in the target time period, the target network device executes the first intent operation and does not execute an intent operation other than the first intent operation. That the knowledge provision network element updates the intent knowledge based on the policy information includes: The knowledge provision network element updates the intent knowledge based on the policy information and the performance evaluation information.

Optionally, the first intent operation is a single intent operation or an intent operation combination including a plurality of intent operations.

Therefore, in this application, the knowledge provision network element may manage the intent knowledge at a granularity of the single intent operation or the plurality of intent operations. During update of intent knowledge of an intent operation, the intent knowledge is updated based on performance evaluation information corresponding to a time period and a network device that executes only the intent operation. During update of intent knowledge of an intent operation combination, the intent knowledge is updated based on performance evaluation information corresponding to a time period and a network device that executes only the intent operations in the intent operation combination, so that accuracy of the updated knowledge can be improved.

With reference to the first aspect, in some implementations of the first aspect, the policy information further indicates a manner of determining the at least one target network device and the target time period, and that the knowledge provision network element obtains performance evaluation information includes: The knowledge provision network element determines the performance evaluation information based on the policy information; or the knowledge provision network element sends the policy information to a knowledge consumption network element, and the knowledge provision network element receives the performance evaluation information from the knowledge consumption network element.

Therefore, in this application, the policy information sent by the network management network element may be used to determine the target network device and the target time period, so that flexibility of knowledge update can be improved.

With reference to the first aspect, in some implementations of the first aspect, the policy information includes at least one of the following constraint conditions: a quantity of target network devices is greater than or equal to a first threshold, and a length of the target time period is greater than or equal to a second threshold.

Therefore, in this application, the policy information sent by the network management network element may include a constraint condition for knowledge update, to avoid inaccurate intent knowledge update caused by an excessively small quantity of sampling points, thereby improving reliability of knowledge update.

With reference to the first aspect, in some implementations of the first aspect, the method further includes: The knowledge provision network element obtains confidence information, where the confidence information indicates a trustworthiness level of the performance evaluation information. That the knowledge provision network element updates the intent knowledge based on the policy information includes: The knowledge provision network element updates the intent knowledge based on the policy information and the confidence information.

With reference to the first aspect, in some implementations of the first aspect, that the knowledge provision network element obtains confidence information includes: The knowledge provision network element receives the confidence information from the knowledge consumption network element. That the knowledge provision network element obtains performance evaluation information includes: The knowledge provision network element receives the performance evaluation information from the knowledge consumption network element when the trustworthiness level is greater than or equal to a third threshold.

With reference to the first aspect, in some implementations of the first aspect, the method further includes: The knowledge provision network element receives first information from the network management network element, where the first information indicates a manner of determining the confidence information. That the knowledge provision network element obtains confidence information includes: The knowledge provision network element determines the confidence information based on the first information; or the knowledge provision network element sends the first information to the knowledge consumption network element; and the knowledge provision network element receives the confidence information from the knowledge consumption network element.

Therefore, in this application, the knowledge provision network element may obtain the trustworthiness level of the performance evaluation information, to improve the reliability of knowledge update.

According to a second aspect, a knowledge update method is provided. The method may be executed by a network management network element or a chip in the network management network element. The method includes: The network management network element receives knowledge information from a knowledge provision network element, where the knowledge information indicates quality of intent knowledge of a first intent operation. The network management network element sends policy information to the knowledge provision network element, where the policy information indicates a manner of updating the intent knowledge.

In this way, in this application, the knowledge provision network element may feed back the quality of the intent knowledge to the network management network element, the network management network element may deliver, to the knowledge provision network element based on the quality, the manner of updating the intent knowledge, and the knowledge provision network element may perform updating based on the policy information in a subsequent intent knowledge update procedure, to improve quality of updated knowledge.

With reference to the second aspect, in some implementations of the second aspect, the policy information includes at least one of the following constraint conditions: a quantity of target network devices is greater than or equal to a first threshold, and a length of a target time period is greater than or equal to a second threshold.

With reference to the second aspect, in some implementations of the second aspect, the method further includes: The network management network element sends first information to the knowledge provision network element, where the first information indicates a manner of determining confidence information, the confidence information indicates a trustworthiness level of performance evaluation information, the performance evaluation information indicates a change value of a performance indicator of at least one target network device in the target time period, and in the target time period, the target network device executes the first intent operation and does not execute an intent operation other than the first intent operation.

According to a third aspect, a knowledge update method is provided. The method may be executed by a knowledge consumption network element or a chip in the knowledge consumption network element. The method includes: The knowledge consumption network element receives policy information from a knowledge provision network element, where the policy information indicates a manner of updating intent knowledge. The knowledge consumption network element determines performance evaluation information based on the policy information, where the performance evaluation information indicates a change value of a performance indicator of at least one target network device in a target time period, and in the target time period, the target network device executes a first intent operation and does not execute an intent operation other than the first intent operation. The knowledge consumption network element sends the performance evaluation information to the knowledge provision network element.

In this way, in this application, the knowledge provision network element may feed back quality of the intent knowledge to the network management network element, the network management network element may deliver, to the knowledge provision network element based on the quality, the manner of updating the intent knowledge, and the knowledge provision network element may perform updating based on the policy information in a subsequent intent knowledge update procedure, to improve quality of updated knowledge.

With reference to the third aspect, in some implementations of the third aspect, the policy information includes at least one of the following constraint conditions: a quantity of target network devices is greater than or equal to a first threshold, and a length of the target time period is greater than or equal to a second threshold.

With reference to the third aspect, in some implementations of the third aspect, the method further includes: The knowledge consumption network element receives first information from the knowledge provision network element, where the first information indicates a manner of determining confidence information, and the confidence information indicates a trustworthiness level of the performance evaluation information. The knowledge consumption network element determines the confidence information based on the first information. The knowledge consumption network element sends the confidence information to the knowledge provision network element.

According to a fourth aspect, a communication apparatus for knowledge update is provided. The apparatus includes a transceiver unit and a processing unit. The transceiver unit is configured to send knowledge information to a network management network element, where the knowledge information indicates quality of intent knowledge of a first intent operation. The transceiver unit is configured to receive policy information from the network management network element, where the policy information indicates a manner of updating the intent knowledge. The processing unit is configured to update the intent knowledge based on the policy information.

In this way, in this application, the knowledge provision network element may feed back the quality of the intent knowledge to the network management network element, the network management network element may deliver, to the knowledge provision network element based on the quality, the manner of updating the intent knowledge, and the knowledge provision network element may perform updating based on the policy information in a subsequent intent knowledge update procedure, to improve quality of updated knowledge.

With reference to the fourth aspect, in some implementations of the fourth aspect, the apparatus further includes an obtaining unit. The obtaining unit is configured to obtain performance evaluation information, where the performance evaluation information indicates a change value of a performance indicator of at least one target network device in a target time period, and in the target time period, the target network device executes the first intent operation and does not execute an intent operation other than the first intent operation. The processing unit is specifically configured to update the intent knowledge based on the policy information and the performance evaluation information.

With reference to the fourth aspect, in some implementations of the fourth aspect, the policy information further indicates a manner of determining the at least one target network device and the target time period; and the obtaining unit is specifically configured to determine the performance evaluation information based on the policy information; or the obtaining unit is specifically configured to: send the policy information to a knowledge consumption network element, and receive the performance evaluation information from the knowledge consumption network element.

With reference to the fourth aspect, in some implementations of the fourth aspect, the policy information includes at least one of the following constraint conditions: a quantity of target network devices is greater than or equal to a first threshold, and a length of the target time period is greater than or equal to a second threshold.

With reference to the fourth aspect, in some implementations of the fourth aspect, the obtaining unit is further configured to obtain confidence information, where the confidence information indicates a trustworthiness level of the performance evaluation information; and the processing unit is specifically configured to update the intent knowledge based on the policy information and the confidence information.

With reference to the fourth aspect, in some implementations of the fourth aspect, the obtaining unit is specifically configured to receive the confidence information from the knowledge consumption network element; and the obtaining unit is further specifically configured to receive the performance evaluation information from the knowledge consumption network element when the trustworthiness level is greater than or equal to a third threshold.

With reference to the fourth aspect, in some implementations of the fourth aspect, the transceiver unit is further configured to receive first information from the network management network element, where the first information indicates a manner of determining the confidence information; and the obtaining unit is specifically configured to: determine the confidence information based on the first information; or send the first information to the knowledge consumption network element, and receive the confidence information from the knowledge consumption network element.

According to a fifth aspect, a communication apparatus for knowledge update is provided. The apparatus includes a transceiver unit and a processing unit. The transceiver unit is configured to receive knowledge information from a knowledge provision network element, where the knowledge information indicates quality of intent knowledge of a first intent operation; the processing unit is configured to determine policy information, where the policy information indicates a manner of updating the intent knowledge; and the transceiver unit is further configured to send the policy information to the knowledge provision network element.

In this way, in this application, the knowledge provision network element may feed back the quality of the intent knowledge to the network management network element, the network management network element may deliver, to the knowledge provision network element based on the quality, the manner of updating the intent knowledge, and the knowledge provision network element may perform updating based on the policy information in a subsequent intent knowledge update procedure, to improve quality of updated knowledge.

With reference to the fifth aspect, in some implementations of the fifth aspect, the policy information includes at least one of the following constraint conditions: a quantity of target network devices is greater than or equal to a first threshold, and a length of a target time period is greater than or equal to a second threshold.

With reference to the fifth aspect, in some implementations of the fifth aspect, the transceiver unit is further configured to send first information to the knowledge provision network element, where the first information indicates a manner of determining confidence information, the confidence information indicates a trustworthiness level of performance evaluation information, the performance evaluation information indicates a change value of a performance indicator of at least one target network device in the target time period, and in the target time period, the target network device executes the first intent operation and does not execute an intent operation other than the first intent operation.

According to a sixth aspect, a communication apparatus for knowledge update is provided. The apparatus includes a transceiver unit and a processing unit. The transceiver unit is configured to receive policy information from a knowledge provision network element, where the policy information indicates a manner of updating intent knowledge. The processing unit is configured to determine performance evaluation information based on the policy information, where the performance evaluation information indicates a change value of a performance indicator of at least one target network device in a target time period, and in the target time period, the target network device executes a first intent operation and does not execute an intent operation other than the first intent operation. The transceiver unit is further configured to send the performance evaluation information to the knowledge provision network element.

In this way, in this application, the knowledge provision network element may feed back quality of the intent knowledge to a network management network element, the network management network element may deliver, to the knowledge provision network element based on the quality, the manner of updating the intent knowledge, and the knowledge provision network element may perform updating based on the policy information in a subsequent intent knowledge update procedure, to improve quality of updated knowledge.

With reference to the sixth aspect, in some implementations of the sixth aspect, the policy information includes at least one of the following constraint conditions: a quantity of target network devices is greater than or equal to a first threshold, and a length of the target time period is greater than or equal to a second threshold.

With reference to the sixth aspect, in some implementations of the sixth aspect, the transceiver unit is further configured to receive first information from the knowledge provision network element, where the first information indicates a manner of determining confidence information, and the confidence information indicates a trustworthiness level of the performance evaluation information; the processing unit is further configured to determine the confidence information based on the first information; and the transceiver unit is further configured to send the confidence information to the knowledge provision network element.

According to a seventh aspect, a communication apparatus is provided, and the apparatus may include a processing unit, a sending unit, and a receiving unit. Optionally, the sending unit and the receiving unit may alternatively be a transceiver unit.

When the apparatus is a knowledge provision network element, the processing unit may be a processor, and the sending unit and the receiving unit may be a transceiver. The apparatus may further include a storage unit, and the storage unit may be a memory. The storage unit is configured to store instructions, and the processing unit executes the instructions stored in the storage unit, to enable the knowledge provision network element to execute any method in the first aspect. When the apparatus is a chip in a knowledge provision network element, the processing unit may be a processor, and the sending unit and the receiving unit may be an input/output interface, a pin, a circuit, or the like. The processing unit executes instructions stored in a storage unit, to enable the chip to execute the method in the first aspect. The storage unit is configured to store instructions. The storage unit may be a storage unit (for example, a register or a cache) in the chip, or may be a storage unit (for example, a read-only memory or a random access memory) that is in the knowledge provision network element and that is outside the chip.

When the apparatus is a network management network element, the processing unit may be a processor, and the sending unit and the receiving unit may be a transceiver. The apparatus may further include a storage unit, and the storage unit may be a memory. The storage unit is configured to store instructions, and the processing unit executes the instructions stored in the storage unit, to enable the network management network element to execute any method in the second aspect. When the apparatus is a chip in a network management network element, the processing unit may be a processor, and the sending unit and the receiving unit may be an input/output interface, a pin, a circuit, or the like. The processing unit executes instructions stored in a storage unit, to enable the chip to execute the method in the second aspect. The storage unit is configured to store instructions. The storage unit may be a storage unit (for example, a register or a cache) in the chip, or may be a storage unit (for example, a read-only memory or a random access memory) that is in the network management network element and that is outside the chip.

When the apparatus is a network consumption network element, the processing unit may be a processor, and the sending unit and the receiving unit may be a transceiver. The apparatus may further include a storage unit, and the storage unit may be a memory. The storage unit is configured to store instructions, and the processing unit executes the instructions stored in the storage unit, to enable the network consumption network element to execute any method in the third aspect. When the apparatus is a chip in a network consumption network element, the processing unit may be a processor, and the sending unit and the receiving unit may be an input/output interface, a pin, a circuit, or the like. The processing unit executes instructions stored in a storage unit, to enable the chip to execute the method in the third aspect. The storage unit is configured to store instructions. The storage unit may be a storage unit (for example, a register or a cache) in the chip, or may be a storage unit (for example, a read-only memory or a random access memory) that is in the network consumption network element and that is outside the chip.

According to an eighth aspect, a communication apparatus is provided, including a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement any method in the first aspect, the second aspect, or the third aspect by using a logic circuit or executing code instructions.

According to a ninth aspect, a computer-readable storage medium is provided. The computer-readable storage medium stores a computer program or instructions. When the computer program or the instructions are executed, any method in the first aspect, the second aspect, or the third aspect is implemented.

According to a tenth aspect, a computer program product including instructions is provided. When the instructions are run, any method in the first aspect, the second aspect, or the third aspect is implemented.

According to an eleventh aspect, a computer program is provided. The computer program includes code or instructions; and when the code or the instructions are run, the method according to any possible implementation of the first aspect, the second aspect, or the third aspect is implemented.

According to a twelfth aspect, a chip system is provided. The chip system includes a processor, may further include a memory, and is configured to implement at least one method described in the first aspect, the second aspect, or the third aspect. The chip system may include a chip, or may include a chip and another discrete component.

According to a thirteenth aspect, a communication system is provided. The system includes the apparatus according to any one of the fourth aspect, the fifth aspect, or the sixth aspect.

### BRIEF DESCRIPTION OF DRAWINGS

FIG. 1 is a diagram of an architecture of a communication system to which an embodiment of this application is applicable;
FIG. 2 is a schematic flowchart of a knowledge update method 200;
FIG. 3 is a diagram in which a communication system executes two intent solutions;
FIG. 4 is a schematic flowchart of a knowledge update method 400 according to an embodiment of this application;
FIG. 5 is a schematic flowchart of a method for obtaining performance evaluation information by a knowledge provision network element;
FIG. 6 is a schematic flowchart of a method for obtaining confidence information by a knowledge provision network element;
FIG. 7 is a schematic flowchart of a knowledge update method 700 according to an embodiment of this application;
FIG. 8 is a schematic flowchart of a knowledge update method 800 according to an embodiment of this application;
FIG. 9 is a schematic flowchart of a knowledge update method 900 according to an embodiment of this application; and
FIG. 10 and FIG. 11 are diagrams of structures of possible communication apparatuses according to embodiments of this application.

### DESCRIPTION OF EMBODIMENTS

The following describes technical solutions of this application with reference to the accompanying drawings.

The technical solutions of this application may be applied to various network function virtualization (network function virtualization, NFV) systems. In the systems, current service technical solutions, network construction schemes, and network operations and maintenance methods of an operator may be described as modes and policies in a standard formal language, and the technical solutions and the construction schemes are implemented based on the modes and the policies. For example, the technical solutions in this application may be applied to one or more of the following systems: a wireless intent driven network (wireless intent driven network, wIDN) system, an experiential networked intelligence (experiential networked intelligence, ENI) system, an intent driven management service (intent driven management service, IDMS) system, an open network automation platform (open network automation platform, ONAP) system, or the like.

For clarity, the following explains some terms in embodiments of this application.

An intent is an expectation for an action system. The intent may include one or more of the following: a requirement, an intent target, and a constraint.

An intent instance is an object obtained by instantiating an intent. For example, in this application, the intent may be replaced with the intent instance.

An intent expression is an expression used to carry an intent, where the expression includes one or more of the following: an intent action name, an intent action attribute, an intent action object name, or an intent action object attribute. The intent expression has specific syntax and semantics.

An intent target indicates a target value that needs to be achieved for an intent.

Intent translation is a procedure of translating an intent into an intent executable command, a rule, or a sub-intent.

Intent execution is a procedure of delivering an intent executable command, a sub-intent, or a rule, and adjusting the intent executable command, the sub-intent, or the rule based on a network environment and an intent achievement status.

An intent executable command is a series of instructions formed by performing operations such as translation and decision on an intent.

An intent schema specifies syntax and semantics of an intent expression. The intent schema may include one or more of the following: a field, a value range of the field, a type of the field, and a hierarchical relationship between fields. For example, the field may be used to describe a type, a name, or a consumer of the intent schema.

An intent status includes an activated state, a conflict state, a deactivated state, a sleep state, and the like. That an intent is in an activated state may be understood as that the intent is being executed. That an intent is in a conflict state may be understood as that the intent conflicts with an intent in a system. That an intent is in a deactivated state may be understood as that the intent is not executed. That an intent is in a sleep state may be understood as that execution of the intent is suspended because an intent target of the intent is not achieved for long time.

Intent creation means creating an intent in an intent system and creating a corresponding intent context.

Intent knowledge is a related parameter of an intent schema stored in an intent knowledge repository. For example, the related parameter may include one or more of the following: an executable operation corresponding to an intent, an intent action entity identifier, or an intent action entity type.

An intent solution is an intent execution solution corresponding to an intent expression. The intent solution may be used to determine an intent operation that needs to be executed for executing an intent.

An intent operation is an executable operation corresponding to an intent target. The intent operation includes one or more intent sub-operations.

An intent sub-operation is a component of an intent operation. One intent sub-operation may include one or more operation instructions, and the one or more operation instructions are executed by one execution object.

Intent maintenance means adjusting an intent executable operation based on a change in a system network environment to achieve an intent target.

Intent achievement means that a system detects that a KPI value on a network reaches a target value in an intent expression, that is, an intent target is achieved.

A network device in embodiments of this application may be a device configured to communicate with a terminal. The network device may be a base transceiver station (base transceiver station, BTS) in a global system for mobile communications (global system for mobile communications, GSM) or a code division multiple access (code division multiple access, CDMA) system, or may be a NodeB (NodeB, NB) in a wideband code division multiple access (wideband code division multiple access, WCDMA) system, or may be an evolved NodeB (evolved NodeB, eNB or eNodeB) in an LTE system, or may be a radio controller in a scenario of a cloud radio access network (cloud radio access network, CRAN). Alternatively, the network device may be a relay station, an access point, a vehicle-mounted device, a wearable device, a network device in a 5G network, a network device in a future 6G network, a network device in a PLMN network, or the like. This is not limited in embodiments of this application.

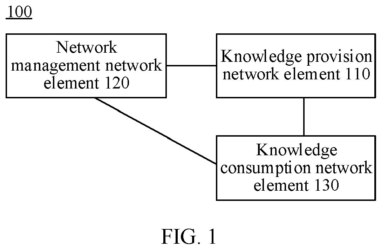

For ease of understanding of embodiments of this application, an application scenario in embodiments of this application is first described in detail with reference to FIG. 1.

FIG. 1 is a diagram of a structure of a communication system to which an embodiment of this application is applicable. Apparatuses that may be related in the communication system are first described.
1. A knowledge provision network element 110 may also be referred to as a knowledge management (knowledge management, KM) network element, and may be configured to manage knowledge, for example, provide services such as knowledge storage, knowledge query, and knowledge update. In this embodiment of this application, the knowledge management network element may provide a knowledge service for a knowledge consumption network element 130. In this way, during analysis, the knowledge consumption network element 130 may refer to expertise and knowledge provided by the knowledge provision network element 110.
   It should be understood that in a communication system (for example, a wIDN system or an IDMS system) for intent execution, the knowledge managed by the knowledge provision network element 110 may be intent knowledge. In another communication system, for example, a system in which an artificial intelligence (artificial intelligence, AI) model or a machine learning (machine learning, ML) model runs, the knowledge managed by the knowledge provision network element 110 may alternatively be expertise and knowledge of the model. In the following embodiments, the intent knowledge is used as an example for description.
2. A network management network element 120 can be responsible for network operations, management, and maintenance. For example, the network management network element 120 may send a request for implementing an intent to the knowledge consumption network element 130, and the network management network element 120 may further deliver initial intent knowledge to the knowledge provision network element 110. In some communication systems, the network management network element 120 may be a network management system (network management system, NMS), a service consumer, or a management service (management service, MnS) network element. In a future communication system or another communication system, the network management network element 120 may have another name, or may have another function. This is not particularly limited in this application.
3. A knowledge consumption network element 130 may be used for intent execution. For example, the knowledge consumption network element 130 may receive a request for implementing an intent, query, based on the intent, the knowledge provision network element 110 for related intent knowledge to generate an intent operation, and deliver the intent operation to at least one network device. In some communication systems, the knowledge consumption network element 130 may be an intent driven management function (intent driven management function, IDMF) network element. In a future communication system or another communication system, the knowledge consumption network element 130 may have another name, or may have another function. This is not particularly limited in this application.

In addition, in some communication systems, the knowledge consumption network element 130 may be deployed on a device management network element, an element management system, or an equipment management system (equipment management system, EMS). The device management network element, the element management system, or the EMS may further include a data collection coordination network element, where the data collection coordination network element may be configured to collect data. For example, the data collection coordination network element may receive a KPI subscription request from the knowledge consumption network element 130, and collect a KPI value of one or more network devices based on the KPI subscription request for KPI reporting. In some communication systems, the data collection coordination network element may be a data collection coordination function (data collection coordination function, DCCF) network element. In a future communication system or another communication system, the data collection coordination network element may have another name, or may have another function. This is not particularly limited in this application.

It should be noted that the solutions in this application may be applied to another system including a corresponding network element. This is not limited in this application. It may be understood that the foregoing network elements or functions may be network elements in a hardware device, may be software functions running on dedicated hardware, or may be virtualized functions instantiated on a platform (for example, a cloud platform). Optionally, the foregoing network elements or functions may be implemented by one device, may be jointly implemented by a plurality of devices, or may be implemented by one functional module in one device. This is not specifically limited in embodiments of this application.

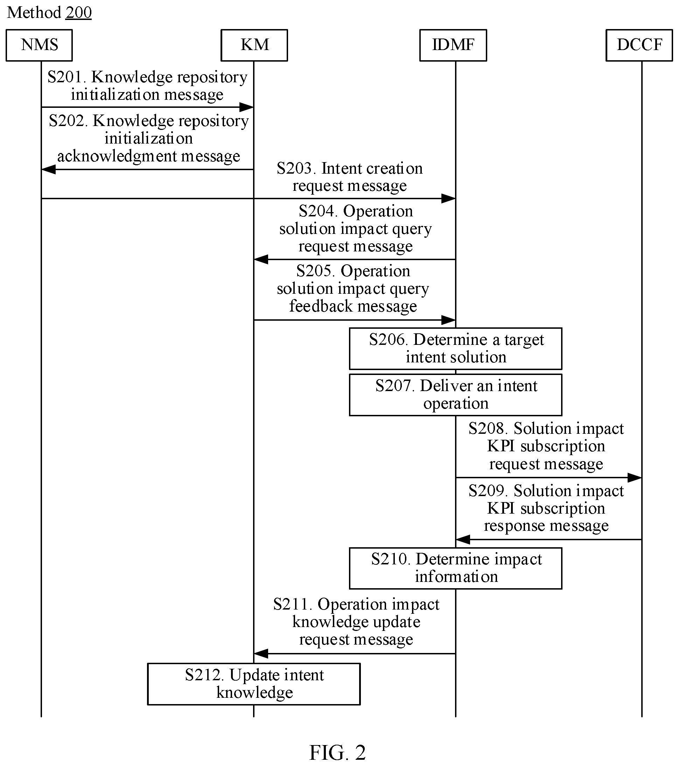

When the network device executes an intent operation, the knowledge consumption network element may obtain a change value of a performance indicator of the network device, and generate intent knowledge of the intent operation based on the change value. However, the network device may execute a plurality of intent operations in a same time period, and the change value of the performance indicator may be a result of the plurality of intent operations. The intent knowledge of the intent operation generated by the knowledge consumption network element may be affected by another intent operation. Consequently, an inappropriate intent operation may be generated in a subsequent intent execution procedure of a system, and an expectation for an action system cannot be met. The following first describes a knowledge update method with reference to FIG. 2.

FIG. 2 is a schematic flowchart of a knowledge update method 200.

S201. An NMS network element sends a knowledge repository initialization message to a KM network element.

The knowledge repository initialization message includes intent knowledge, where the intent knowledge may be impact of each of a plurality of intent operations on a KPI value of a system. The KM network element may initialize a knowledge repository in the KM network element based on the knowledge repository initialization message. For example, the KM network element may store the intent knowledge in the knowledge repository.

S202. The KM network element sends a knowledge repository initialization acknowledgment message to the NMS network element in response to the knowledge repository initialization message.

S203. The NMS network element sends an intent creation request message to an IDMF network element.

The intent creation request message is used to request to create a first intent. For example, the intent creation request message may include an intent expression of the first intent. The IDMF network element may generate at least one intent solution based on the intent expression, where each intent solution includes at least one intent operation.

S204. The IDMF network element sends an operation solution impact query request message to the KM network element.

The operation solution impact query request message may be used to query impact of each of the at least one intent solution on the system. For example, the operation solution impact query request message carries identification information of the at least one intent solution.

S205. The KM network element sends an operation solution impact query feedback message to the IDMF network element in response to the operation solution impact query request message.

The operation solution impact query feedback message may be used to return the impact of the at least one intent solution on the system. For example, the KM network element may query impact of the intent operation in each intent solution on the system, to generate the operation solution impact query feedback message.

S206. The IDMF network element determines a target intent solution based on the operation solution impact query feedback message.

For example, the IDMF network element selects an appropriate intent solution from the at least one intent solution as a target intent solution based on the operation solution impact query feedback message, and executes the target intent solution.

S207. The IDMF network element delivers an intent operation.

The IDMF network element delivers a corresponding intent operation to at least one network device based on the target intent solution.

S208. The IDMF network element sends a solution impact KPI subscription request message to a DCCF network element.

The solution impact KPI subscription request message is used to obtain KPI information of the at least one network device. For example, the solution impact KPI subscription request message may carry identification information of at least one network device that executes the intent operation and a KPI name.

S209. The DCCF network element sends a solution impact KPI subscription response message to the IDMF network element in response to the solution impact KPI subscription request message.

In S209, the DCCF network element sends the KPI information to the IDMF network element.

The KPI information includes a KPI value of the at least one network device.

S210. The IDMF network element determines impact information based on the KPI information.

The IDMF network element may process (for example, calculate an average value of) at least one change value of the KPI value of the at least one network device during execution of the intent operation, to generate the impact information of the intent operation.

S211. The IDMF network element sends an operation impact knowledge update request message to the KM network element.

The operation impact knowledge update request message is used to request the KM network element to update intent knowledge of the intent operation.

S212. The KM network element updates the intent knowledge of the intent operation based on the operation impact knowledge update request message.

For example, the KM network element may store the change value of the KPI value in the knowledge repository.

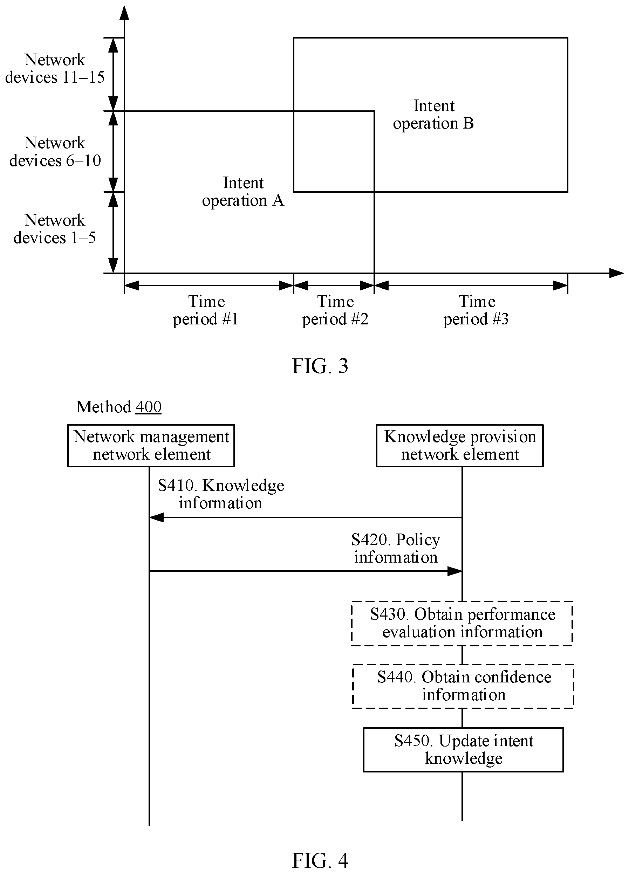

It can be learned that, in the procedure in the method 200, the intent knowledge of the intent operation is updated in step S212. When executing a subsequent intent, the system determines the to-be-executed target intent solution based on updated intent knowledge. However, in step S210 (the IDMF network element determines impact information based on the KPI information), the KPI information means change values of KPI values of all network devices executing the intent operation in an entire time period in which the intent operation is executed. In a scenario in which a network device simultaneously executes another intent operation, intent knowledge obtained by the IDMF network element is inaccurate. Consequently, when executing the subsequent intent, the system cannot determine an appropriate intent solution based on the intent knowledge. The following describes the scenario with reference to FIG. 3.

FIG. 3 is a diagram in which a communication system executes two intent solutions. Refer to FIG. 3. The communication system executes an intent solution A and an intent solution B.

The intent solution A is used for throughput optimization. The intent solution A includes an intent operation A. The intent operation A is enabling downlink 265QAM. The intent solution A is as follows: A network device 1 to a network device 10 execute the intent operation A in a first time period.

The intent solution B is used for energy saving. The intent solution B includes an intent operation B. The intent operation B is enabling intelligent carrier shutdown. The intent solution B is as follows: A network device 6 to a network device 15 execute the intent operation B in a second time period.

The first time period and the second time period have an overlapping time period. For ease of description, in this embodiment of this application, the first time period excluding the overlapping time period is described as a time period #1, the overlapping time period is described as a time period #2, and the second time period excluding the overlapping time period is described as a time period #3. Details are not described below.

The method 200 is executed as follows.

The IDMF network element obtains first KPI information, where an average change value of downlink throughputs of the network devices 1 to 10 in the first time period is increased by 20%.

The KM network element determines intent knowledge of the intent operation A based on the first KPI information, where executing the intent operation A causes a downlink throughput of the system to be increased by 20%.

The IDMF network element obtains second KPI information, where an average change value of downlink throughputs of the network devices 6 to 15 in the second time period is decreased by 10%.

The KM network element determines intent knowledge of the intent operation B based on the second KPI information, where executing the intent operation B causes the downlink throughput of the system to be decreased by 20%.

However, because the network devices 6 to 10 simultaneously execute the intent operation A and the intent operation B in the time period #2, intent knowledge, of the intent operation A, updated according to the method 200 includes impact information of the intent operation B, and intent knowledge, of the intent operation B, updated according to the method 200 includes impact information of the intent operation A, causing low accuracy of the updated intent knowledge. In view of this, a knowledge update method and a communication apparatus are urgently needed, to improve accuracy of updated knowledge. The following first describes the knowledge update method with reference to FIG. 4.

FIG. 4 is a schematic flowchart of a knowledge update method 400 according to an embodiment of this application.

S410. A knowledge provision network element sends knowledge information to a network management network element, and correspondingly, the network management network element receives the knowledge information from the knowledge provision network element.

The knowledge information indicates quality of intent knowledge of a first intent operation.

The intent knowledge of the first intent operation may be intent knowledge determined by the knowledge provision network element based on a policy in a process of executing the first intent operation. The policy may be a policy sent by the network management network element to the knowledge provision network element during initialization, or a policy sent by the network management network element to the knowledge provision network element before the intent knowledge is determined this time.

Optionally, the first intent operation is a single intent operation or an intent operation combination including a plurality of intent operations.

It should be understood that when the first intent operation is the intent operation combination including the plurality of intent operations, the system may manage the intent knowledge at a granularity of the intent operation combination. For example, the first intent operation is an intent combination including an intent operation A and an intent operation B, and the intent knowledge describes impact of simultaneously executing the intent operation A and the intent operation B on the system.

Optionally, the knowledge information includes at least one of the following information: the intent knowledge, a manner of determining the intent knowledge, time when the intent knowledge is determined, original intent knowledge of the first intent operation before the intent knowledge is determined, and change information of the intent knowledge.

For example, the network management network element determines the quality of the intent knowledge based on a change value between the intent knowledge and the original intent knowledge. In addition, when the knowledge provision network element determines a plurality of pieces of intent knowledge of the first intent operation for a plurality of times, the original intent knowledge may include a plurality of pieces of historical intent knowledge determined for a plurality of times before intent knowledge determined this time, so that the network management network element may determine the quality of the intent knowledge based on a change variance of the plurality of pieces of intent knowledge. By way of example but not limitation, when the change variance is large, it may be considered that the quality of the intent knowledge is poor.

Alternatively, in another example, the knowledge provision network element generates a plurality of pieces of intent knowledge for a plurality of times based on a predetermined policy, and determines the change information of the intent knowledge based on the plurality of pieces of intent knowledge generated for the plurality of times, so that the network management network element may determine the quality of the intent knowledge based on the change information.

Alternatively, optionally, the knowledge information includes a quality value of the intent knowledge. In other words, after determining the quality value of the intent knowledge, the knowledge provision network element sends the quality value to the network management network element.

It should be understood that the knowledge information may further include another parameter that can reflect the quality of the knowledge. A manner in which the knowledge information indicates the quality is not particularly limited in this application.

In a possible implementation, the knowledge information may be quality of intent knowledge executed currently or in a specific time period. For example, the knowledge information indicates that the quality of the intent knowledge is lower than a preset value, and the network management network element may learn, according to a preset rule, that quality of intent knowledge of an intent operation that is currently in an execution state is lower than the preset value.

S420. The network management network element sends policy information to the knowledge provision network element, and correspondingly, the knowledge provision network element receives the policy information from the network management network element.

The policy information indicates a manner of updating the intent knowledge.

Optionally, before the network management network element sends the policy information to the knowledge provision network element, the network management network element determines the policy information based on the knowledge information.

For example, when the knowledge information indicates that the quality of the intent knowledge does not meet expectations, the network management network element may redetermine or adjust a manner of determining the intent knowledge, generate the policy information, and send the policy information to the knowledge provision network element.

Optionally, the policy information further indicates a manner of determining at least one target network device and a target time period.

The target network device is one or more of network devices executing the first intent operation, and the target time period is all or some time periods in which the first intent operation is executed. Further, the knowledge provision network element may update the intent knowledge based on a change value of a performance indicator of the target network device in the target time period.

Optionally, in the target time period, the target network device executes the first intent operation, and does not execute an intent operation other than the first intent operation.

For example, in the communication system shown in FIG. 3, when the first intent operation is the intent operation A, the network devices 1 to 5 execute only the intent operation A in the time period #1 and the time period #2, and the network devices 6 to 10 execute only the intent operation A in the time period #1; when the first intent operation is the intent operation B, the network devices 6 to 10 execute only the intent operation B in the time period #2, and the network devices 11 to 15 execute only the intent operation B in the time period #2 and the time period #3; or when the first intent operation is an operation combination including the intent operation A and the intent operation B, the network devices 6 to 10 execute the intent operation A and the intent operation B in the time period #2.

Optionally, the policy information includes at least one of the following policies.

First policy: A longest time period in which only the intent operation in the intent operation combination is executed is the target time period, and a network device that executes only the intent operation in the intent operation combination in the target time period is the target network device.

For example, in the communication system shown in FIG. 3, the device management network element determines intent knowledge of the intent operation Abased on change values of performance indicators of the network devices 1 to 5 in the time period #1 and the time period #2.

Second policy: A time period in which there is a maximum quantity of network devices that execute only the intent operation in the intent operation combination is the target time period, and a network device that executes only the intent operation in the intent operation combination in the target time period is the target network device.

For example, in the communication system shown in FIG. 3, the device management network element determines intent knowledge of the intent operation Abased on change values of performance indicators of the network devices 1 to 10 in the time period #1.

Third policy: A network device that executes only the intent operation in the intent operation combination in a time period is the target network device, and the target time period corresponding to the target network device is the time period in which only the intent operation in the intent operation combination is executed.

For example, in the communication system shown in FIG. 3, the device management network element determines intent knowledge of the intent operation Abased on change values of performance indicators of the network devices 1 to 5 in the time period #1 and the time period #2 and change values of performance indicators of the network devices 6 to 10 in the time period #1.

It should be understood that the first policy may be a policy on a time range priority, the second policy may be a policy on a space range priority, and the third policy may be a policy on a collection point quantity priority. The foregoing policies are merely an example for description. Embodiments of this application may further include another policy for selecting the target network device and the target time period.

Therefore, the device management network element receives the policy information, and may select an appropriate policy based on the policy information to obtain the change value of the performance indicator of the target network device in the target time period, to determine intent knowledge of a corresponding intent operation.

Optionally, the policy information further indicates a priority of the policy.

For example, when the policy information includes a plurality of policies, the policy information may further indicate a priority order of the plurality of policies.

Optionally, the policy information further includes at least one of the following constraint conditions: a quantity of target network devices is greater than or equal to a first threshold, and a length of the target time period is greater than or equal to a second threshold.

For example, in the communication system shown in FIG. 3, in a process in which the device management network element determines the intent knowledge of the intent operation A, if the policy information indicates that a quantity of target network devices is greater than or equal to 6, the device management network element needs to select at least six network devices from the network devices 1 to 10 as target network devices. For example, the device management network element may determine the intent knowledge of the intent operation A by using the second policy or the third policy.

Alternatively, in another example, in the communication system shown in FIG. 3, the first information includes the three policies, and priorities of the three policies are as follows: A priority of the first policy is higher than a priority of the second policy, and the priority of the second policy is higher than a priority of the third policy. In a process in which the device management network element determines the intent knowledge of the intent operation A, if the first information indicates that a quantity of target access networks is greater than or equal to 6, the device management network element cannot meet a constraint condition by using the first policy, and the device management network element needs to use the second policy to determine the intent knowledge of the intent operation A.

Optionally, the policy information further indicates to determine the first intent operation.

For example, the policy information includes a maximum quantity of overlapping operations, and the knowledge provision network element updates the intent knowledge of the first intent operation whose overlapping operation quantity is less than or equal to the maximum quantity of overlapping operations. By way of example but not limitation, in the communication system shown in FIG. 3, if the maximum quantity of overlapping operations is 1, the knowledge provision network element updates the intent knowledge of the intent operation A and intent knowledge of the intent operation B; or if the maximum quantity of overlapping operations is 2, the knowledge provision network element updates the intent knowledge of the intent operation A, intent knowledge of the intent operation B, and intent knowledge of the operation combination of the intent operation A and the intent operation B.

Optionally, the policy information corresponds to identification information of the first intent operation.

The identification information of the first intent operation may be an identifier of the first intent operation, an identifier of a first intent solution to which the first intent operation belongs, or an identifier of an intent to which the first intent operation belongs.

For example, the policy information includes general policy information and special policy information. The general policy information and the special policy information may include different policies, constraint conditions, and the like. The knowledge provision network element may determine, based on the identification information of the first intent operation, whether to use the general policy information or the special policy information.

Optionally, in S430, the knowledge provision network element obtains performance evaluation information.

The performance evaluation information further indicates a change value of a performance indicator of the at least one target network device in the target time period.

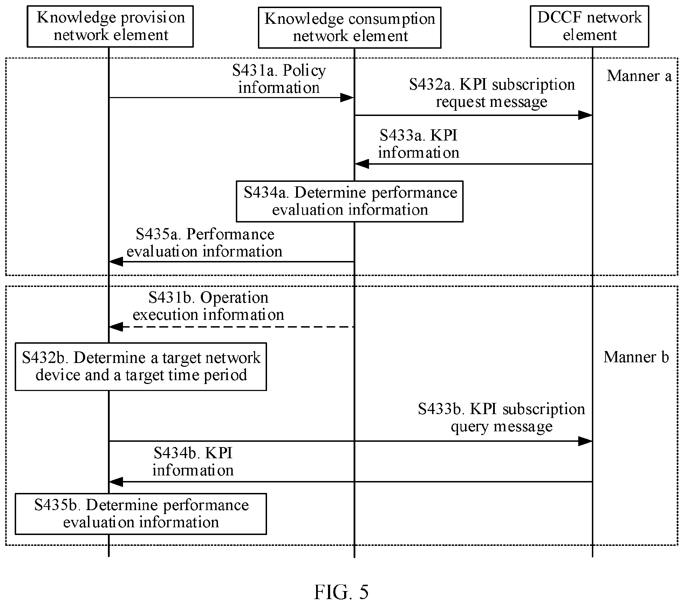

There may be two manners in which the knowledge provision network element obtains the performance evaluation information. The following describes the two manners with reference to FIG. 5.

### Manner a:

S431a. The knowledge provision network element sends the policy information to a knowledge consumption network element, and correspondingly, the knowledge consumption network element receives the policy information from the knowledge provision network element.

S432a. The knowledge consumption network element sends a KPI subscription request message to a DCCF network element, and correspondingly, the DCCF network element receives the KPI subscription request message from the knowledge consumption network element.

The KPI subscription request message is used to request a KPI value of at least one network device. For example, the KPI subscription request message may include a KPI name and identification information of the at least one network device. The at least one network device may be a network device managed by the knowledge consumption network element. Alternatively, the knowledge consumption network element may determine the target network device and the target time period based on the policy information, and request a KPI value of the target network device in the target time period.

S433a. The DCCF network element sends KPI information to the knowledge consumption network element, and correspondingly, the knowledge consumption network element receives the KPI information from the DCCF network element.

For example, the DCCF network element may return the requested KPI value of the network device to the knowledge consumption network element in response to the KPI subscription request message. The KPI information may include a reported KPI name, a collection object (namely, a requested network device), and a KPI value.

The DCCF network element may periodically return collected KPI values to the knowledge consumption network element for a plurality of times. Alternatively, after collecting KPI values for a plurality of times, the DCCF network element may return the KPI values collected for the plurality of times to the knowledge consumption network element at a time. This is not particularly limited in this application.

S434a. The knowledge consumption network element determines the performance evaluation information based on the KPI information.

For example, if the KPI information includes a KPI value of the at least one network device managed by the knowledge consumption network element, the knowledge consumption network element may determine a KPI value of the target network device based on the policy information.

S435a. The knowledge consumption network element sends the performance evaluation information to the knowledge provision network element, and correspondingly, the knowledge provision network element receives the performance evaluation information from the knowledge consumption network element.

Further, the knowledge provision network element obtains the performance evaluation information from the knowledge consumption network element.

Therefore, in Manner a, the knowledge provision network element may send the policy information to the knowledge consumption network element, and the knowledge consumption network element determines the performance evaluation information based on the policy information, and sends the performance evaluation information to the knowledge provision network element.

### Manner b:

Optionally, in S431b, a knowledge consumption network element sends operation execution information to the knowledge provision network element, and correspondingly, the knowledge provision network element receives the operation execution information from the knowledge consumption network element.

The operation execution information indicates a network device executing the first intent operation and a time period for executing the first intent operation, or the operation execution information indicates an intent operation currently being executed in a system, and a network device executing the intent operation and a time period for executing the intent operation, or the operation execution information indicates an intent solution currently being executed in a system. For example, the operation execution information includes at least one of the following information: identification information of an intent solution (or an intent operation), time information of executing the intent solution (or the intent operation), and a network device executing the intent solution (or the intent operation).

S432b. The knowledge provision network element determines the at least one target network device and the target time period based on the policy information.

For example, the knowledge provision network element may determine the target network device and the target time period based on a policy and a constraint condition that are included in the policy information. When the knowledge consumption network element further sends the operation execution information to the knowledge provision network element, the knowledge provision network element may determine the target network device and the target time period based on the operation execution information and the policy information.

S433b. The knowledge provision network element sends a KPI query request message to a DCCF network element, and correspondingly, the DCCF network element receives the KPI query request message from the knowledge provision network element.

The KPI query request message may be used to request a KPI value of the target network device in the target time period. For example, the KPI query request message may include a KPI name, identification information of the target network device, and the target time period.

S434b. The DCCF network element sends KPI information to the knowledge provision network element, and correspondingly, the knowledge provision network element receives the KPI information from the DCCF network element.

The KPI information may indicate KPI values of the target network device at a plurality of collection time points in the target time period. For example, the KPI information may include the KPI name, the identification information of the target network device, the plurality of collection time points, and the corresponding KPI values.

S435b. The knowledge provision network element determines the performance evaluation information based on the KPI information.

For example, the knowledge provision network element may determine change values of the KPI values of the target network device in the target time period based on the KPI values of the target network device at the plurality of time points.

Therefore, in Manner b, the knowledge provision network element may request the DCCF network element to query KPI value of the target network device in the target time period, to determine the performance evaluation information based on the KPI value.

Optionally, in S440, the knowledge provision network element obtains confidence information.

The confidence information indicates a trustworthiness level of the performance evaluation information.

The trustworthiness level may indicate accuracy of determining the intent knowledge by the device management network element by selecting the target network device and the target time period. For example, the trustworthiness level may be related to a quantity of selected target network devices, quality of the target network device, a length of the target time period, quality of the target time period, or the performance indicator. For example, when a quantity of sampling points is larger (that is, the quantity of target network devices is larger and/or the target time period is longer), the trustworthiness level is higher.

Optionally, before the knowledge provision network element obtains the confidence information, the network management network element sends first information to the knowledge provision network element, and correspondingly, the knowledge provision network element receives the first information from the network management network element.

The first information indicates a manner of determining the confidence information. The knowledge provision network element may obtain the confidence information based on the first information.

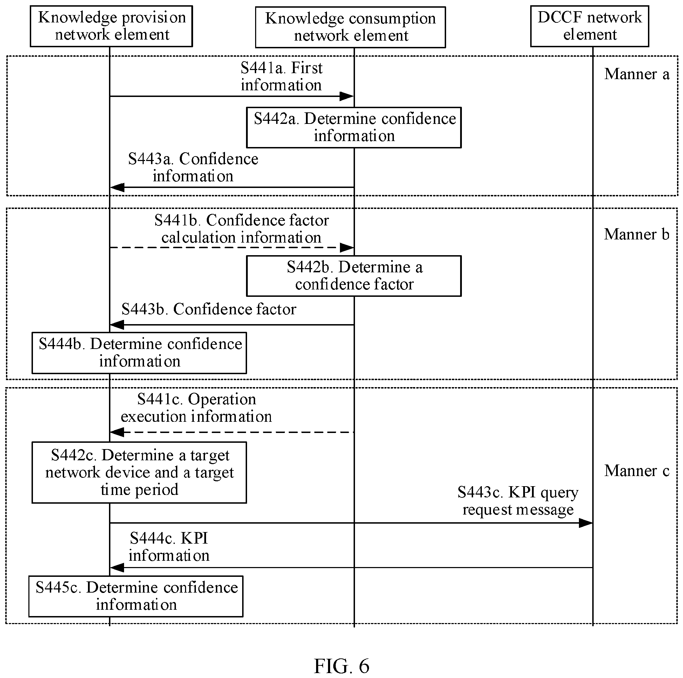

There may be three manners in which the knowledge provision network element obtains the confidence information. The following describes the three manners with reference to FIG. 6.

### Manner a:

S441a. The knowledge provision network element sends the first information to the knowledge consumption network element, and correspondingly, the knowledge consumption network element receives the first information from the knowledge provision network element.

The first information indicates a manner of determining the confidence information.

S442a. The knowledge consumption network element determines the confidence information based on the first information.

For example, the knowledge consumption network element may determine a confidence level in the manner that is of determining the confidence information and that is indicated by the first information based on the quantity of target network devices, the length of the target time period, the change variance of the KPI values, or the like.

S443a. The knowledge consumption network element sends the confidence information to the knowledge provision network element, and correspondingly, the knowledge provision network element receives the confidence information from the knowledge consumption network element.

Optionally, when the trustworthiness level is greater than or equal to a third threshold, the knowledge consumption network element sends the performance evaluation information to the knowledge provision network element; or when the trustworthiness level is less than a third threshold, the knowledge consumption network element may send, to the knowledge provision network element, information indicating that the trustworthiness level of the performance evaluation information is not high, so that the knowledge provision network element or the network management network element may adjust the manner of determining the confidence information. Optionally, the first information further indicates the third threshold.

Therefore, the knowledge provision network element may send the manner of determining the confidence information to the knowledge consumption network element, and the knowledge consumption network element determines the confidence information and sends the confidence information to the knowledge provision network element.

### Manner b:

Optionally, in S441b, the knowledge provision network element sends confidence factor calculation information to the knowledge consumption network element based on the first information, and correspondingly, the knowledge consumption network element receives the confidence factor calculation information from the knowledge provision network element.

The confidence factor calculation information indicates a manner of determining a confidence factor. Alternatively, the confidence factor indicates a form of the confidence factor (for example, a form such as time, a quantity of network devices, or a quantity of sampling points). Alternatively, the confidence factor calculation information indicates the knowledge consumption network element to feed back a value of a confidence factor based on the performance evaluation information, where the confidence factor is a factor required for calculating a confidence level. For example, the confidence factor may include the length of the target time period, the quantity of target network devices, the quantity of sampling points, and the like.

The knowledge provision network element may parse the first information to obtain the confidence factor calculation information. For example, if the first information indicates that a confidence level calculation manner is as follows: Confidence level = max(1, time range/24 hours), the knowledge provision network element may determine that the confidence factor calculation information includes time information.

S442b. The knowledge consumption network element determines the confidence factor.

The knowledge consumption network element may determine the value of the confidence factor by obtaining a network sampling point corresponding to the performance evaluation information. For example, when the knowledge provision network element sends the confidence factor calculation information to the knowledge consumption network element, and the confidence factor calculation information indicates that the confidence factor is the time information, the knowledge consumption network element may use a time interval (for example, a time interval between sampling start time and sampling end time) of the network sampling point corresponding to the performance evaluation information as the value of the confidence factor.

S443b. The knowledge consumption network element sends the confidence factor to the knowledge provision network element, and correspondingly, the knowledge provision network element receives the confidence factor from the knowledge consumption network element.

For example, the knowledge consumption network element sends the value of the confidence factor to the knowledge provision network element.

S444b. The knowledge provision network element determines the confidence information based on the first information and the confidence factor.

Therefore, in Manner b, the knowledge provision network element may obtain, based on the first information, the confidence factor required for determining the confidence level, and send the manner of determining the confidence factor to the knowledge consumption network element. Further, after receiving the confidence factor from the knowledge consumption network element, the knowledge provision network element may determine the confidence information based on the confidence factor.

### Manner c:

Optionally, in S441c, the knowledge consumption network element sends operation execution information to the knowledge provision network element, and correspondingly, the knowledge provision network element receives the operation execution information from the knowledge consumption network element.

The operation execution information indicates a network device executing the first intent operation and a time period for executing the first intent operation, or the operation execution information indicates an intent operation currently being executed in a system, and a network device executing the intent operation and a time period for executing the intent operation, or the operation execution information indicates an intent solution currently being executed in a system. For example, the operation execution information includes at least one of the following information: identification information of an intent solution (or an intent operation), time information of executing the intent solution (or the intent operation), and a network device executing the intent solution (or the intent operation).

S442c. The knowledge provision network element determines the at least one target network device and the target time period based on the policy information.

For example, the knowledge provision network element may determine the target network device and the target time period based on a policy and a constraint condition that are included in the policy information. When the knowledge consumption network element further sends the operation execution information to the knowledge provision network element, the knowledge provision network element may determine the target network device and the target time period based on the operation execution information and the policy information.

S443c. The knowledge provision network element sends a KPI query request message to a DCCF network element, and correspondingly, the DCCF network element receives the KPI query request message from the knowledge provision network element.

The KPI query request message may be used to request a KPI value of the target network device in the target time period. This step may be similar to step S432b, and details are not described herein again.

S444c. The DCCF network element sends KPI information to the knowledge provision network element, and correspondingly, the knowledge provision network element receives the KPI information from the DCCF network element.

The KPI information may indicate KPI values of the target network device at a plurality of collection time points in the target time period. This step may be similar to step S433b, and details are not described herein again.

S445c. The knowledge provision network element determines the confidence information based on the first information and the KPI information.

Therefore, in Manner c, the knowledge provision network element may request the DCCF network element to query KPI value of the target network device in the target time period, and determine the confidence information based on the KPI information and the first information.

S450. The knowledge provision network element updates the intent knowledge.

For example, the knowledge provision network element may obtain historical intent knowledge of the first intent operation in a knowledge repository based on the performance evaluation information, and then process the performance evaluation information based on a knowledge update algorithm, to determine new intent knowledge and update the knowledge in the knowledge repository.

The knowledge provision network element may preset the knowledge update algorithm, or the network management network element may send, to the knowledge provision network element, information indicating the knowledge update algorithm.

Optionally, the knowledge provision network element determines, based on the confidence information, whether to update the intent knowledge. When a trustworthiness level indicated by the confidence information is greater than or equal to a predetermined threshold, the knowledge provision network element updates the intent knowledge based on the performance evaluation information. Alternatively, when a trustworthiness level indicated by the confidence information is less than a predetermined threshold, the knowledge provision network element does not update the intent knowledge.

Alternatively, optionally, the knowledge provision network element determines updated intent knowledge based on the confidence information and the performance evaluation information. For example, the knowledge provision network element determines a weighting coefficient of the historical intent knowledge and current performance evaluation information based on the trustworthiness level indicated by the confidence information, and updates the intent knowledge based on the weighting coefficient.

In this way, in this application, the knowledge provision network element may feed back the quality of the intent knowledge to the network management network element, the network management network element may deliver, to the knowledge provision network element based on the quality, the manner of updating the intent knowledge, and the knowledge provision network element may perform updating based on the policy information in a subsequent intent knowledge update procedure, to improve quality of the updated knowledge.

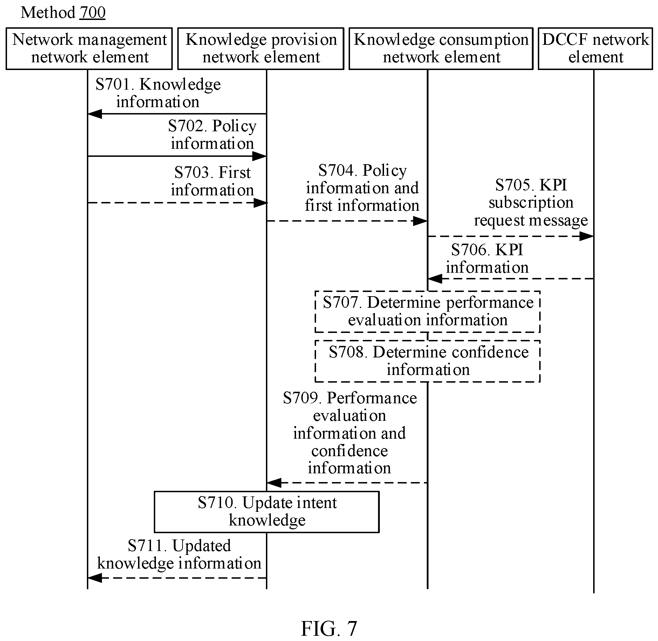

FIG. 7 is a schematic flowchart of a knowledge update method 700 according to an embodiment of this application.

S701. A knowledge provision network element sends knowledge information to a network management network element, and correspondingly, the network management network element receives the knowledge information from the knowledge provision network element.

The knowledge information indicates quality of intent knowledge of a first intent operation. For descriptions of this step, refer to the descriptions of step S410 in the method 400. For brevity, details are not described herein again.

S702. The network management network element sends policy information to the knowledge provision network element, and correspondingly, the knowledge provision network element receives the policy information from the network management network element.

The policy information is determined based on the knowledge information, and the policy information indicates a manner of updating the intent knowledge.

For example, the network management network element sends a knowledge repository update indication message to the knowledge provision network element, where the knowledge repository update indication message carries the policy information.

For example, the policy information includes at least one of the following information: a constraint, a policy, a maximum quantity of overlapping operations, and priority information.

For descriptions of this step, refer to the descriptions of step S420 in the method 400. For brevity, details are not described herein again.

Optionally, in S703, the network management network element sends first information to the knowledge provision network element, and correspondingly, the knowledge provision network element receives the first information from the network management network element.

The first information indicates a manner of determining confidence information. For descriptions of this step, refer to the descriptions of step S440 in the method 400. For brevity, details are not described herein again.

Optionally, in S704, the knowledge provision network element sends the policy information and the first information to a knowledge consumption network element, and correspondingly, the knowledge consumption network element receives the policy information and the first information from the knowledge provision network element.

For example, the knowledge provision network element sends a knowledge evaluation request message to the knowledge consumption network element, where the knowledge assessment request message carries the policy information and the first information.

Optionally, in S705, the knowledge consumption network element sends a KPI subscription request message to a DCCF network element, and correspondingly, the DCCF network element receives the KPI subscription request message from the knowledge consumption network element.

The KPI subscription request message is used to request a KPI value of at least one network device.

For descriptions of this step, refer to the descriptions of step S432a in the method 400. For brevity, details are not described herein again.

Optionally, in S706, the DCCF network element sends KPI information to the knowledge consumption network element, and correspondingly, the knowledge consumption network element receives the KPI information from the DCCF network element.

For descriptions of this step, refer to the descriptions of step S433a in the method 400. For brevity, details are not described herein again.

Optionally, in S707, the knowledge consumption network element determines performance evaluation information.

For example, the knowledge consumption network element determines the performance evaluation information based on the policy information and the KPI information. For descriptions of this step, refer to the descriptions of step S434a in the method 400. For brevity, details are not described herein again.

Optionally, in S708, the knowledge consumption network element determines the confidence information.

For example, the knowledge consumption network element determines the confidence information based on the first information.

For descriptions of this step, refer to the descriptions of step S442a in the method 400. For brevity, details are not described herein again.

Optionally, the knowledge consumption network element determines, based on a confidence threshold, whether to send the performance evaluation information and the confidence information to the knowledge provision network element.

The knowledge consumption network element sends the performance evaluation information and the confidence information to the knowledge provision network element when a trustworthiness level is greater than or equal to the confidence threshold.

Optionally, in S709, the knowledge consumption network element sends the performance evaluation information and the confidence information to the knowledge provision network element, and correspondingly, the knowledge provision network element receives the performance evaluation information and the confidence information from the knowledge consumption network element.

For example, the knowledge consumption network element sends an operation impact knowledge update request message to the knowledge provision network element, where the operation impact knowledge update request message includes the performance evaluation information and the confidence information.

Optionally, the operation impact knowledge update request message further includes identification information of an evaluation object, for example, identification information of the first intent operation or information about an intent solution corresponding to the first intent operation.

S710. The knowledge provision network element updates the intent knowledge.

For descriptions of this step, refer to the descriptions of step S450 in the method 400. For brevity, details are not described herein again.

Optionally, in S711, the knowledge provision network element sends knowledge information corresponding to updated intent knowledge to the network management network element, and correspondingly, the network management network element receives the knowledge information corresponding to the updated intent knowledge from the knowledge provision network element.

For example, the knowledge provision network element sends a knowledge repository update notification message to the network management network element, where the knowledge repository update notification message includes the knowledge information corresponding to the updated intent knowledge.

Further, the network management network element may determine, based on quality of the updated intent knowledge, whether the policy information needs to be adjusted. If the network management network element needs to adjust the policy information, the network management network element may regenerate policy information, or the network management network element may adjust information such as a policy, a constraint condition, and a confidence level calculation manner included in the policy information.

In this way, in this application, the knowledge provision network element may feed back the quality of the intent knowledge to the network management network element, the network management network element may deliver, to the knowledge provision network element based on the quality, the manner of updating the intent knowledge, and the knowledge provision network element may perform updating based on the policy information in a subsequent intent knowledge update procedure, to improve the quality of the updated knowledge.

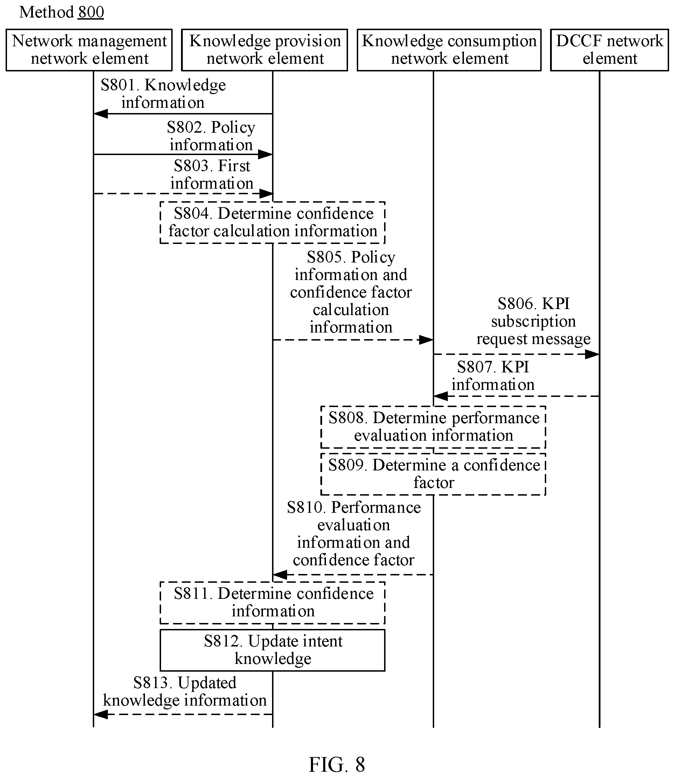

FIG. 8 is a schematic flowchart of a knowledge update method 800 according to an embodiment of this application.

S801. A knowledge provision network element sends knowledge information to a network management network element, and correspondingly, the network management network element receives the knowledge information from the knowledge provision network element.

The knowledge information indicates quality of intent knowledge of a first intent operation. For descriptions of this step, refer to the descriptions of step S410 in the method 400. For brevity, details are not described herein again.

S802. The network management network element sends policy information to the knowledge provision network element, and correspondingly, the knowledge provision network element receives the policy information from the network management network element.

The policy information is determined based on the knowledge information, and the policy information indicates a manner of updating the intent knowledge.

For example, the network management network element sends a knowledge repository update indication message to the knowledge provision network element, where the knowledge repository update indication message carries the policy information.

For example, the policy information includes at least one of the following information: a constraint, a policy, a maximum quantity of overlapping operations, and priority information.

For descriptions of this step, refer to the descriptions of step S420 in the method 400. For brevity, details are not described herein again.

Optionally, in S803, the network management network element sends first information to the knowledge provision network element, and correspondingly, the knowledge provision network element receives the first information from the network management network element.

The first information indicates a manner of determining confidence information. For descriptions of this step, refer to the descriptions of step S440 in the method 400. For brevity, details are not described herein again.

Optionally, in S804, the knowledge provision network element determines confidence factor calculation information based on the first information.

The confidence factor calculation information indicates a manner of determining a confidence factor, where the confidence factor calculation information indicates the confidence factor required for calculating a confidence level. For descriptions of this step, refer to the descriptions of step S441b in the method 400. For brevity, details are not described herein again.

Optionally, in S805, the knowledge provision network element sends the policy information and the confidence factor calculation information to a knowledge consumption network element, and correspondingly, the knowledge consumption network element receives the policy information and the confidence factor calculation information from the knowledge provision network element.

For example, the knowledge provision network element sends a knowledge evaluation request message to the knowledge consumption network element, where the knowledge assessment request message carries the policy information and the confidence factor calculation information.

Optionally, in S806, the knowledge consumption network element sends a KPI subscription request message to a DCCF network element, and correspondingly, the DCCF network element receives the KPI subscription request message from the knowledge consumption network element.

The KPI subscription request message is used to request a KPI value of at least one network device.

For descriptions of this step, refer to the descriptions of step S432a in the method 400. For brevity, details are not described herein again.

Optionally, in S807, the DCCF network element sends KPI information to the knowledge consumption network element, and correspondingly, the knowledge consumption network element receives the KPI information from the DCCF network element.

For descriptions of this step, refer to the descriptions of step S433a in the method 400. For brevity, details are not described herein again.

Optionally, in S808, the knowledge consumption network element determines performance evaluation information.

For example, the knowledge consumption network element determines the performance evaluation information based on the policy information and the KPI information. For descriptions of this step, refer to the descriptions of step S434a in the method 400. For brevity, details are not described herein again.

Optionally, in S809, the knowledge consumption network element determines the confidence factor.

For example, the knowledge consumption network element determines the confidence factor based on the confidence factor calculation information. For descriptions of this step, refer to the descriptions of step S442b in the method 400. For brevity, details are not described herein again.

Optionally, in S810, the knowledge consumption network element sends the performance evaluation information and the confidence factor to the knowledge provision network element, and correspondingly, the knowledge provision network element receives the performance evaluation information and the confidence factor from the knowledge consumption network element.

For example, the knowledge consumption network element sends an operation impact knowledge update request message to the knowledge provision network element, where the operation impact knowledge update request message includes the performance evaluation information and the confidence factor.

For descriptions of this step, refer to the descriptions of step S443b in the method 400. For brevity, details are not described herein again.

Optionally, in S811, the knowledge provision network element determines the confidence information based on the confidence factor.

For descriptions of this step, refer to the descriptions of step S444b in the method 400. For brevity, details are not described herein again.

S812. The knowledge provision network element updates the intent knowledge.

For descriptions of this step, refer to the descriptions of step S450 in the method 400. For brevity, details are not described herein again.

Optionally, in S813, the knowledge provision network element sends knowledge information corresponding to updated intent knowledge to the network management network element, and correspondingly, the network management network element receives the knowledge information corresponding to the updated intent knowledge from the knowledge provision network element.

In this way, in this application, the knowledge provision network element may feed back the quality of the intent knowledge to the network management network element, the network management network element may deliver, to the knowledge provision network element based on the quality, the manner of updating the intent knowledge, and the knowledge provision network element may perform updating based on the policy information in a subsequent intent knowledge update procedure, to improve quality of the updated knowledge.

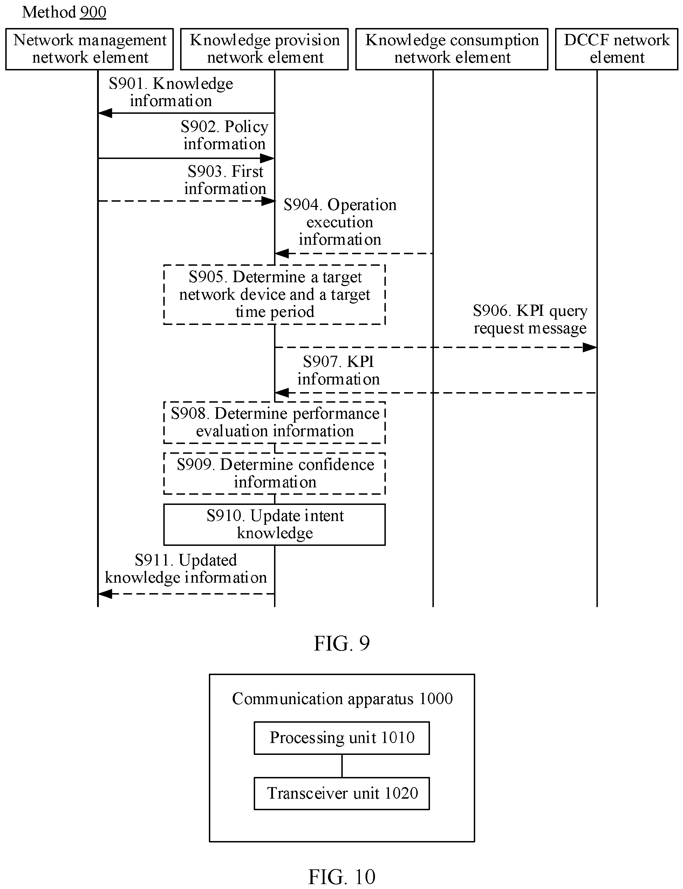

FIG. 9 is a schematic flowchart of a knowledge update method 900 according to an embodiment of this application.

S901. A knowledge provision network element sends knowledge information to a network management network element, and correspondingly, the network management network element receives the knowledge information from the knowledge provision network element.

The knowledge information indicates quality of intent knowledge of a first intent operation. For descriptions of this step, refer to the descriptions of step S410 in the method 400. For brevity, details are not described herein again.

S902. The network management network element sends policy information to the knowledge provision network element, and correspondingly, the knowledge provision network element receives the policy information from the network management network element.

The policy information is determined based on the knowledge information, and the policy information indicates a manner of updating the intent knowledge.

For example, the network management network element sends a knowledge repository update indication message to the knowledge provision network element, where the knowledge repository update indication message carries the policy information.

For example, the policy information includes at least one of the following information: a constraint, a policy, a maximum quantity of overlapping operations, and priority information.

For descriptions of this step, refer to the descriptions of step S420 in the method 400. For brevity, details are not described herein again.

Optionally, in S903, the network management network element sends first information to the knowledge provision network element, and correspondingly, the knowledge provision network element receives the first information from the network management network element.

The first information indicates a manner of determining the confidence information. For descriptions of this step, refer to the descriptions of step S440 in the method 400. For brevity, details are not described herein again.

Optionally, in S904, the knowledge consumption network element sends operation execution information to the knowledge provision network element, and correspondingly, the knowledge provision network element receives the operation execution information from the knowledge consumption network element.

For descriptions of this step, refer to the descriptions of step S43 lb in the method 400. For brevity, details are not described herein again.

Optionally, in S905, the knowledge provision network element determines the at least one target network device and the target time period based on the policy information.

For descriptions of this step, refer to the descriptions of step S432b in the method 400. For brevity, details are not described herein again.

Optionally, in S906, the knowledge provision network element sends a KPI query request message to the DCCF network element, and correspondingly, the DCCF network element receives the KPI query request message from the knowledge provision network element.

For descriptions of this step, refer to the descriptions of step S433b in the method 400. For brevity, details are not described herein again.

Optionally, in S907, the DCCF network element sends KPI information to the knowledge provision network element, and correspondingly, the knowledge provision network element receives the KPI information from the DCCF network element.

For descriptions of this step, refer to the descriptions of step S434b in the method 400. For brevity, details are not described herein again.

Optionally, in S908, the knowledge provision network element determines the performance evaluation information based on the KPI information.

For descriptions of this step, refer to the descriptions of step S435b in the method 400. For brevity, details are not described herein again.

Optionally, in S909, the knowledge provision network element determines the confidence information based on the first information and the KPI information.

For descriptions of this step, refer to the descriptions of step S445c in the method 400. For brevity, details are not described herein again.

S910. The knowledge provision network element updates the intent knowledge.

For descriptions of this step, refer to the descriptions of step S450 in the method 400. For brevity, details are not described herein again.

Optionally, in S911, the knowledge provision network element sends knowledge information corresponding to updated intent knowledge to the network management network element, and correspondingly, the network management network element receives the knowledge information corresponding to the updated intent knowledge from the knowledge provision network element.

In this way, in this application, the knowledge provision network element may feed back the quality of the intent knowledge to the network management network element, the network management network element may deliver, to the knowledge provision network element based on the quality, the manner of updating the intent knowledge, and the knowledge provision network element may perform updating based on the policy information in a subsequent intent knowledge update procedure, to improve quality of updated knowledge.

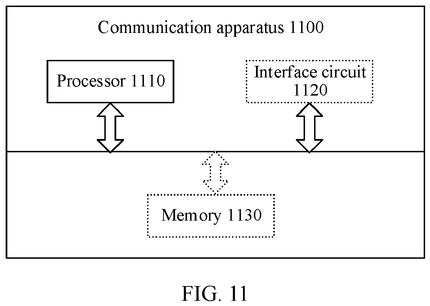

FIG. 10 and FIG. 11 are diagrams of structures of possible communication apparatuses according to embodiments of this application. The communication apparatuses may be configured to implement functions of the knowledge provision network element, the knowledge consumption network element, and the network management network element in the foregoing method embodiments, and therefore can also implement beneficial effects of the foregoing method embodiments. In this embodiment of this application, the communication apparatus may be the knowledge provision network element, the knowledge consumption network element, or the network management network element, or may be a module (for example, a chip) used in the knowledge provision network element, the knowledge consumption network element, or the network management network element.

As shown in FIG. 10, a communication apparatus 1000 includes a processing unit 1010 and a transceiver unit 1020. The communication apparatus 1000 is configured to implement functions of the knowledge provision network element, the knowledge consumption network element, and the network management network element in the method embodiment shown in FIG. 4. Alternatively, a communication apparatus 1000 may include modules configured to implement any function or operation performed by the knowledge provision network element, the knowledge consumption network element, and the network management network element in the method embodiment shown in FIG. 4, where all or some of the modules may be implemented by using software, hardware, firmware, or any combination thereof.

When the communication apparatus 1000 is configured to implement the function of the knowledge provision network element in the method embodiment shown in FIG. 4, the transceiver unit 1020 is configured to send knowledge information to a network management network element, where the knowledge information indicates quality of intent knowledge of a first intent operation; the transceiver unit 1020 is configured to receive policy information from the network management network element, where the policy information indicates a manner of updating the intent knowledge; and the processing unit 1010 is configured to update the intent knowledge based on the policy information.

In this way, in this application, the knowledge provision network element may feed back the quality of the intent knowledge to the network management network element, the network management network element may deliver, to the knowledge provision network element based on the quality, the manner of updating the intent knowledge, and the knowledge provision network element may perform updating based on the policy information in a subsequent intent knowledge update procedure, to improve quality of updated knowledge.

Optionally, the apparatus further includes an obtaining unit. The obtaining unit is configured to obtain performance evaluation information, where the performance evaluation information indicates a change value of a performance indicator of at least one target network device in a target time period, and in the target time period, the target network device executes the first intent operation and does not execute an intent operation other than the first intent operation. The processing unit 1010 is specifically configured to update the intent knowledge based on the policy information and the performance evaluation information.

Optionally, the policy information further indicates a manner of determining the at least one target network device and the target time period; and the obtaining unit is specifically configured to determine the performance evaluation information based on the policy information; or the obtaining unit is specifically configured to send the policy information to the knowledge consumption network element, and receive the performance evaluation information from the knowledge consumption network element.

Optionally, the policy information includes at least one of the following constraint conditions: a quantity of target network devices is greater than or equal to a first threshold, and a length of the target time period is greater than or equal to a second threshold.

Optionally, the obtaining unit is further configured to obtain confidence information, where the confidence information indicates a trustworthiness level of the performance evaluation information; and the processing unit 1010 is specifically configured to update the intent knowledge based on the policy information and the confidence information.

Optionally, the obtaining unit is specifically configured to receive the confidence information from the knowledge consumption network element; and the obtaining unit is further specifically configured to receive the performance evaluation information from the knowledge consumption network element when the trustworthiness level is greater than or equal to a third threshold.

Optionally, the transceiver unit 1020 is further configured to receive first information from the network management network element, where the first information indicates a manner of determining the confidence information; and the obtaining unit is specifically configured to determine the confidence information based on the first information; or send the first information to the knowledge consumption network element, and receive the confidence information from the knowledge consumption network element.

For more detailed descriptions of the processing unit 1010 and the transceiver unit 1020, directly refer to related descriptions in the method embodiment shown in FIG. 4. Details are not described herein again.

When the communication apparatus 1000 is configured to implement the function of the network management network element in the method embodiment shown in FIG. 4, the transceiver unit 1020 is configured to receive knowledge information from a knowledge provision network element, where the knowledge information indicates quality of intent knowledge of a first intent operation; the processing unit 1010 is configured to determine policy information, where the policy information indicates a manner of updating the intent knowledge; and the transceiver unit 1020 is further configured to send the policy information to the knowledge provision network element.

In this way, in this application, the knowledge provision network element may feed back the quality of the intent knowledge to the network management network element, the network management network element may deliver, to the knowledge provision network element based on the quality, the manner of updating the intent knowledge, and the knowledge provision network element may perform updating based on the policy information in a subsequent intent knowledge update procedure, to improve quality of updated knowledge.

Optionally, the policy information includes at least one of the following constraint conditions: a quantity of target network devices is greater than or equal to a first threshold, and a length of the target time period is greater than or equal to a second threshold.

Optionally, the transceiver unit 1020 is further configured to send first information to the knowledge provision network element, where the first information indicates a manner of determining confidence information, the confidence information indicates a trustworthiness level of performance evaluation information, the performance evaluation information indicates a change value of a performance indicator of at least one target network device in a target time period, and in the target time period, the target network device executes the first intent operation and does not execute an intent operation other than the first intent operation.

For more detailed descriptions of the processing unit 1010 and the transceiver unit 1020, directly refer to related descriptions in the method embodiment shown in FIG. 4. Details are not described herein again.

Optionally, when the communication apparatus 1000 is configured to implement the function of the knowledge consumption network element in the method embodiment shown in FIG. 4, the transceiver unit 1020 is configured to receive policy information from a knowledge provision network element, where the policy information indicates a manner of updating intent knowledge; the processing unit 1010 is configured to determine performance evaluation information based on the policy information, where the performance evaluation information indicates a change value of a performance indicator of at least one target network device in a target time period, and in the target time period, the target network device executes the first intent operation and does not execute an intent operation other than the first intent operation; and the transceiver unit 1020 is further configured to send the performance evaluation information to the knowledge provision network element.

In this way, in this application, the knowledge provision network element may feed back the quality of the intent knowledge to the network management network element, the network management network element may deliver, to the knowledge provision network element based on the quality, the manner of updating the intent knowledge, and the knowledge provision network element may perform updating based on the policy information in a subsequent intent knowledge update procedure, to improve quality of updated knowledge.

Optionally, the policy information includes at least one of the following constraint conditions: a quantity of target network devices is greater than or equal to a first threshold, and a length of the target time period is greater than or equal to a second threshold.

Optionally, the transceiver unit 1020 is further configured to receive first information from the knowledge provision network element, where the first information indicates a manner of determining confidence information, and the confidence information indicates a trustworthiness level of the performance evaluation information; the processing unit 1010 is further configured to determine the confidence information based on the first information; and the transceiver unit 1020 is further configured to send the confidence information to the knowledge provision network element.

For more detailed descriptions of the processing unit 1010 and the transceiver unit 1020, directly refer to related descriptions in the method embodiment shown in FIG. 4. Details are not described herein again.

As shown in FIG. 11, a communication apparatus 1100 includes a processor 1110 and an interface circuit 1120. The processor 1110 and the interface circuit 1120 are coupled to each other. It may be understood that the interface circuit 1120 may be a transceiver or an input/output interface. Optionally, the communication apparatus 1100 may further include a memory 1130, configured to store instructions to be executed by the processor 1110, or store input data required by the processor 1110 to run instructions, or store data generated after the processor 1110 runs instructions.

When the communication apparatus 1100 is configured to implement the method shown in FIG. 4, the processor 1110 is configured to implement functions of the processing unit 1010, and the interface circuit 1120 is configured to implement functions of the transceiver unit 1020.

When the communication apparatus 1100 is configured to implement the method shown in FIG. 4, the communication apparatus 1100 includes a processor 1110 and an interface circuit 1120. The processor 1110 and the interface circuit 1120 are coupled to each other. It may be understood that the interface circuit 1120 may be a transceiver or an input/output interface. Optionally, the communication apparatus 1100 may further include a memory 1130, configured to store instructions to be executed by the processor 1110, or store input data required by the processor 1110 to run instructions, or store data generated after the processor 1110 runs instructions.

When the communication apparatus 1100 is configured to implement the method shown in FIG. 4, the processor 1110 is configured to implement functions of the processing unit 1010, and the interface circuit 1120 is configured to implement functions of the transceiver unit 1020.

When the communication apparatus is a chip used in the knowledge provision network element, the knowledge provision network element chip implements the functions of the knowledge provision network element in the foregoing method embodiments. The knowledge provision network element chip receives information from another module (for example, a radio frequency module or an antenna) in the knowledge provision network element, where the information is sent by the network management network element or the knowledge consumption network element to the knowledge provision network element. Alternatively, the knowledge provision network element chip sends information to another module (for example, a radio frequency module or an antenna) in the knowledge provision network element, where the information is sent by the knowledge provision network element to the network management network element or the knowledge consumption network element.

When the communication apparatus is a chip used in the network management network element, the network management network element chip implements the functions of the network management network element in the foregoing method embodiments. The network management network element chip receives information from another module (for example, a radio frequency module or an antenna) in the network management network element, where the information is sent by the knowledge provision network element to the network management network element. Alternatively, the network management network element chip sends information to another module (for example, a radio frequency module or an antenna) in the network management network element, where the information is sent by the network management network element to the knowledge provision network element.

When the communication apparatus is a chip used in the knowledge consumption network element, the knowledge consumption network element chip implements the functions of the knowledge consumption network element in the foregoing method embodiments. The knowledge consumption network element chip receives information from another module (for example, a radio frequency module or an antenna) in the knowledge consumption network element, where the information is sent by the network management network element or the knowledge provision network element to the knowledge consumption network element. Alternatively, the knowledge consumption network element chip sends information to another module (for example, a radio frequency module or an antenna) in the knowledge consumption network element, where the information is sent by the knowledge consumption network element to the network management network element or the knowledge provision network element.

It may be understood that, the processor in embodiments of this application may be a central processing unit (Central Processing Unit, CPU), or may be another general-purpose processor, a digital signal processor (Digital Signal Processor, DSP), an application-specific integrated circuit (Application Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor or the like.

The memory in this embodiment of this application may be a random access memory (Random Access Memory, RAM), a flash memory, a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), a register, a hard disk, a removable hard disk, a CD-ROM, or any other form of storage medium well known in the art. For example, a storage medium is coupled to a processor, so that the processor can read information from the storage medium and write information into the storage medium. Certainly, the storage medium may alternatively be a component of the processor. The processor and the storage medium may be disposed in the ASIC. In addition, the ASIC may be located in a network device or a terminal device. Certainly, the processor and the storage medium may alternatively exist as discrete components in the network device or the terminal device.

All or some of the foregoing embodiments may be implemented by using software, hardware, firmware, or any combination thereof. When software is used to implement embodiments, all or some of embodiments may be implemented in a form of a computer program product. The computer program product includes one or more computer programs or instructions. When the computer programs or instructions are loaded and executed on a computer, all or some of the procedures or functions in embodiments of this application are executed. The computer may be a general-purpose computer, a dedicated computer, a computer network, a network device, a terminal device, or another programmable apparatus. The computer programs or the instructions may be stored in a computer-readable storage medium, or may be transmitted by using the computer-readable storage medium. The computer-readable storage medium may be any usable medium accessible by a computer, or a data storage device such as a server integrating one or more usable media. The usable medium may be a magnetic medium, for example, a floppy disk, a hard disk, or a magnetic tape; may be an optical medium, for example, a DVD; or may be a semiconductor medium, for example, a solid-state drive (solid-state drive, SSD).

In embodiments of this application, unless otherwise stated or there is a logic conflict, terms and/or descriptions in different embodiments are consistent and may be mutually referenced, and technical features in different embodiments may be combined to form a new embodiment according to an inherent logical relationship thereof.

It should be understood that, in embodiments of this application, numbers "first", "second", and the like are merely used to distinguish between different objects, for example, to distinguish between different network devices, and do not constitute a limitation on the scope of embodiments of this application. Embodiments of this application are not limited thereto.

It should be further understood that, in this application, both "when ..." and "if" mean that a network element performs corresponding processing in an objective situation, and are not intended to limit time. The terms do not mean that the network element is required to have a determining action during implementation, and do not mean any other limitation.

It should be further understood that in embodiments of this application, "B corresponding to A" represents that B is associated with A, and B may be determined based on A. However, it should be further understood that determining B based on A does not mean that B is determined based only on A, and B may alternatively be determined based on A and/or other information.

It should be further understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

Unless otherwise specified, an expression used in this application similar to an expression that "an item includes one or more of the following: A, B, and C" usually means that the item may be any one of the following: A; B; C; A and B; A and C; B and C; A, B, and C; A and A; A, A, and A; A, A, and B; A, A, and C; A, B, and B; A, C, and C; B and B; B, B, and B; B, B, and C; C and C; C, C, and C; and another combination of A, B, and C. In the foregoing descriptions, three elements A, B, and C are used as an example to describe an optional case of the item. When an expression is "the item includes at least one of the following: A, B, ..., and X", in other words, more elements are included in the expression, a case to which the item is applicable may also be obtained according to the foregoing rule.

It may be understood that various numbers in embodiments of this application are merely used for differentiation for ease of description, and are not used to limit the scope of embodiments of this application. Sequence numbers of the foregoing processes do not mean execution sequences. The execution sequences of the processes should be determined based on functions and internal logic of the processes.

## Claims

1. A knowledge update method, wherein the method comprises:
sending, by a knowledge provision network element, knowledge information to a network management network element, wherein the knowledge information indicates quality of intent knowledge of a first intent operation;
receiving, by the knowledge provision network element, policy information from the network management network element, wherein the policy information indicates a manner of updating the intent knowledge; and
updating, by the knowledge provision network element, the intent knowledge based on the policy information.

2. The method according to claim 1, wherein the method further comprises:
obtaining, by the knowledge provision network element, performance evaluation information, wherein the performance evaluation information indicates a change value of a performance indicator of at least one target network device in a target time period, and in the target time period, the target network device executes the first intent operation and does not execute an intent operation other than the first intent operation; and
the updating, by the knowledge provision network element, the intent knowledge based on the policy information comprises:
updating, by the knowledge provision network element, the intent knowledge based on the policy information and the performance evaluation information.

3. The method according to claim 2, wherein the policy information further indicates a manner of determining the at least one target network device and the target time period; and
the obtaining, by the knowledge provision network element, performance evaluation information comprises:
determining, by the knowledge provision network element, the performance evaluation information based on the policy information; or
sending, by the knowledge provision network element, the policy information to a knowledge consumption network element; and receiving, by the knowledge provision network element, the performance evaluation information from the knowledge consumption network element.

4. The method according to claim 2 or 3, wherein the policy information comprises at least one of the following constraint conditions: a quantity of target network devices is greater than or equal to a first threshold, and a length of the target time period is greater than or equal to a second threshold.

5. The method according to any one of claims 2 to 4, wherein the method further comprises:
obtaining, by the knowledge provision network element, confidence information, wherein the confidence information indicates a trustworthiness level of the performance evaluation information; and
the updating, by the knowledge provision network element, the intent knowledge based on the policy information comprises:
updating, by the knowledge provision network element, the intent knowledge based on the policy information and the confidence information.

6. The method according to claim 5, wherein the obtaining, by the knowledge provision network element, confidence information comprises:
receiving, by the knowledge provision network element, the confidence information from the knowledge consumption network element; and
the obtaining, by the knowledge provision network element, performance evaluation information comprises:
receiving, by the knowledge provision network element, the performance evaluation information from the knowledge consumption network element when the trustworthiness level is greater than or equal to a third threshold.

7. The method according to claim 5 or 6, wherein the method further comprises:
receiving, by the knowledge provision network element, first information from the network management network element, wherein the first information indicates a manner of determining the confidence information; and
the obtaining, by the knowledge provision network element, confidence information comprises:
determining, by the knowledge provision network element, the confidence information based on the first information; or
sending, by the knowledge provision network element, the first information to the knowledge consumption network element; and receiving, by the knowledge provision network element, the confidence information from the knowledge consumption network element.

8. A knowledge update method, wherein the method comprises:
receiving, by a network management network element, knowledge information from a knowledge provision network element, wherein the knowledge information indicates quality of intent knowledge of a first intent operation; and
sending, by the network management network element, policy information to the knowledge provision network element, wherein the policy information indicates a manner of updating the intent knowledge.

9. The method according to claim 8, wherein the policy information comprises at least one of the following constraint conditions: a quantity of target network devices is greater than or equal to a first threshold, and a length of a target time period is greater than or equal to a second threshold.

10. The method according to claim 8 or 9, wherein the method further comprises:
sending, by the network management network element, first information to the knowledge provision network element, wherein the first information indicates a manner of determining confidence information, the confidence information indicates a trustworthiness level of performance evaluation information, the performance evaluation information indicates a change value of a performance indicator of at least one target network device in the target time period, and in the target time period, the target network device executes the first intent operation and does not execute an intent operation other than the first intent operation.

11. A knowledge update method, wherein the method comprises:
receiving, by a knowledge consumption network element, policy information from a knowledge provision network element, wherein the policy information indicates a manner of updating intent knowledge;
determining, by the knowledge consumption network element, performance evaluation information based on the policy information, wherein the performance evaluation information indicates a change value of a performance indicator of at least one target network device in a target time period, and in the target time period, the target network device executes a first intent operation and does not execute an intent operation other than the first intent operation; and
sending, by the knowledge consumption network element, the performance evaluation information to the knowledge provision network element.

12. The method according to claim 11, wherein the policy information comprises at least one of the following constraint conditions: a quantity of target network devices is greater than or equal to a first threshold, and a length of the target time period is greater than or equal to a second threshold.

13. The method according to claim 11 or 12, wherein the method further comprises:
receiving, by the knowledge consumption network element, first information from the knowledge provision network element, wherein the first information indicates a manner of determining confidence information, and the confidence information indicates a trustworthiness level of the performance evaluation information;
determining, by the knowledge consumption network element, the confidence information based on the first information; and
sending, by the knowledge consumption network element, the confidence information to the knowledge provision network element.

14. A knowledge update method, wherein the method comprises:
sending, by a knowledge provision network element, knowledge information to a network management network element, and receiving, by the network management network element, the knowledge information from the knowledge provision network element, wherein the knowledge information indicates quality of intent knowledge of a first intent operation;
sending, by the network management network element, policy information to the knowledge provision network element, and receiving, by the knowledge provision network element, the policy information from the network management network element, wherein the policy information indicates a manner of updating the intent knowledge; and
updating, by the knowledge provision network element, the intent knowledge based on the policy information.

15. The method according to claim 14, wherein the method further comprises:
obtaining, by the knowledge provision network element, performance evaluation information, wherein the performance evaluation information indicates a change value of a performance indicator of at least one target network device in a target time period, and in the target time period, the target network device executes the first intent operation and does not execute an intent operation other than the first intent operation; and
the updating, by the knowledge provision network element, the intent knowledge based on the policy information comprises:
updating, by the knowledge provision network element, the intent knowledge based on the policy information and the performance evaluation information.

16. The method according to claim 15, wherein the policy information further indicates a manner of determining the at least one target network device and the target time period; and
the obtaining, by the knowledge provision network element, performance evaluation information comprises:
determining, by the knowledge provision network element, the performance evaluation information based on the policy information; or
sending, by the knowledge provision network element, the policy information to a knowledge consumption network element, and receiving, by the knowledge consumption network element, the policy information from the knowledge provision network element; determining, by the knowledge consumption network element, the performance evaluation information based on the policy information; and sending, by the knowledge consumption network element, the performance evaluation information to the knowledge provision network element, and receiving, by the knowledge provision network element, the performance evaluation information from the knowledge consumption network element.

17. The method according to claim 15 or 16, wherein the policy information comprises at least one of the following constraint conditions: a quantity of target network devices is greater than or equal to a first threshold, and a length of the target time period is greater than or equal to a second threshold.

18. The method according to any one of claims 15 to 17, wherein the method further comprises:
obtaining, by the knowledge provision network element, confidence information, wherein the confidence information indicates a trustworthiness level of the performance evaluation information; and
the updating, by the knowledge provision network element, the intent knowledge based on the policy information comprises:
updating, by the knowledge provision network element, the intent knowledge based on the policy information and the confidence information.

19. The method according to claim 18, wherein the obtaining, by the knowledge provision network element, confidence information comprises:
sending, by the knowledge consumption network element, the confidence information to the knowledge provision network element, and receiving, by the knowledge provision network element, the confidence information from the knowledge consumption network element; and
the obtaining, by the knowledge provision network element, performance evaluation information comprises:
receiving, by the knowledge provision network element, the performance evaluation information from the knowledge consumption network element when the trustworthiness level is greater than or equal to a third threshold.

20. The method according to claim 18 or 19, wherein the method further comprises:
sending, by the network management network element, first information to the knowledge provision network element, and receiving, by the knowledge provision network element, the first information from the network management network element, wherein the first information indicates a manner of determining the confidence information; and
the obtaining, by the knowledge provision network element, confidence information comprises:
determining, by the knowledge provision network element, the confidence information based on the first information; or
sending, by the knowledge provision network element, the first information to the knowledge consumption network element; determining, by the knowledge consumption network element, the confidence information based on the first information; and sending, by the knowledge consumption network element, the confidence information to the knowledge provision network element, and receiving, by the knowledge provision network element, the confidence information from the knowledge consumption network element.

21. A communication apparatus for knowledge update, wherein the apparatus comprises a transceiver unit and a processing unit, wherein
the transceiver unit is configured to send knowledge information to a network management network element, wherein the knowledge information indicates quality of intent knowledge of a first intent operation;
the transceiver unit is configured to receive policy information from the network management network element, wherein the policy information indicates a manner of updating the intent knowledge; and
the processing unit is configured to update the intent knowledge based on the policy information.

22. The apparatus according to claim 21, wherein the apparatus further comprises an obtaining unit, wherein
the obtaining unit is configured to obtain performance evaluation information, wherein the performance evaluation information indicates a change value of a performance indicator of at least one target network device in a target time period, and in the target time period, the target network device executes the first intent operation and does not execute an intent operation other than the first intent operation; and
the processing unit is specifically configured to update the intent knowledge based on the policy information and the performance evaluation information.

23. The apparatus according to claim 22, wherein the policy information further indicates a manner of determining the at least one target network device and the target time period; and
the obtaining unit is specifically configured to determine the performance evaluation information based on the policy information; or
the obtaining unit is specifically configured to: send the policy information to a knowledge consumption network element, and receive the performance evaluation information from the knowledge consumption network element.

24. The apparatus according to claim 22 or 23, wherein the policy information comprises at least one of the following constraint conditions: a quantity of target network devices is greater than or equal to a first threshold, and a length of the target time period is greater than or equal to a second threshold.

25. The apparatus according to any one of claims 22 to 24, wherein
the obtaining unit is further configured to obtain confidence information, wherein the confidence information indicates a trustworthiness level of the performance evaluation information; and
the processing unit is specifically configured to update the intent knowledge based on the policy information and the confidence information.

26. The apparatus according to claim 25, wherein
the obtaining unit is specifically configured to receive the confidence information from the knowledge consumption network element; and
the obtaining unit is further specifically configured to receive the performance evaluation information from the knowledge consumption network element when the trustworthiness level is greater than or equal to a third threshold.

27. The apparatus according to claim 25 or 26, wherein
the transceiver unit is further configured to receive first information from the network management network element, wherein the first information indicates a manner of determining the confidence information; and
the obtaining unit is specifically configured to: determine the confidence information based on the first information; or send the first information to the knowledge consumption network element, and receive the confidence information from the knowledge consumption network element.

28. A communication apparatus for knowledge update, wherein the apparatus comprises a transceiver unit and a processing unit, wherein
the transceiver unit is configured to receive knowledge information from a knowledge provision network element, wherein the knowledge information indicates quality of intent knowledge of a first intent operation;
the processing unit is configured to determine policy information, wherein the policy information indicates a manner of updating the intent knowledge; and
the transceiver unit is further configured to send the policy information to the knowledge provision network element.

29. The apparatus according to claim 28, wherein the policy information comprises at least one of the following constraint conditions: a quantity of target network devices is greater than or equal to a first threshold, and a length of a target time period is greater than or equal to a second threshold.

30. The apparatus according to claim 28 or 29, wherein
the transceiver unit is further configured to send first information to the knowledge provision network element, wherein the first information indicates a manner of determining confidence information, the confidence information indicates a trustworthiness level of performance evaluation information, the performance evaluation information indicates a change value of a performance indicator of at least one target network device in the target time period, and in the target time period, the target network device executes the first intent operation and does not execute an intent operation other than the first intent operation.

31. A communication apparatus for knowledge update, wherein the apparatus comprises a transceiver unit and a processing unit, wherein
the transceiver unit is configured to receive policy information from a knowledge provision network element, wherein the policy information indicates a manner of updating intent knowledge;
the processing unit is configured to determine performance evaluation information based on the policy information, wherein the performance evaluation information indicates a change value of a performance indicator of at least one target network device in a target time period, and in the target time period, the target network device executes a first intent operation and does not execute an intent operation other than the first intent operation; and
the transceiver unit is further configured to send the performance evaluation information to the knowledge provision network element.

32. The apparatus according to claim 31, wherein the policy information comprises at least one of the following constraint conditions: a quantity of target network devices is greater than or equal to a first threshold, and a length of the target time period is greater than or equal to a second threshold.

33. The apparatus according to claim 31 or 32, wherein
the transceiver unit is further configured to receive first information from the knowledge provision network element, wherein the first information indicates a manner of determining confidence information, and the confidence information indicates a trustworthiness level of the performance evaluation information;
the processing unit is further configured to determine the confidence information based on the first information; and
the transceiver unit is further configured to send the confidence information to the knowledge provision network element.

34. A communication apparatus, comprising:
a processor, wherein the processor is coupled to a memory, wherein
the processor is configured to execute a computer program or instructions stored in the memory, so that the apparatus is enabled to execute the method according to any one of claims 1 to 7, the method according to any one of claims 8 to 10, or the method according to any one of claims 11 to 13.

35. A computer program product, comprising instructions, wherein when the instructions are run on a computer, the computer is enabled to execute the method according to any one of claims 1 to 7, the method according to any one of claims 8 to 10, or the method according to any one of claims 11 to 13.

36. A computer-readable storage medium, wherein the computer-readable storage medium stores a computer program; and when the computer program is run on a computer, the computer is enabled to execute the method according to any one of claims 1 to 7, or the computer is enabled to execute the method according to any one of claims 8 to 10, or the computer is enabled to execute the method according to any one of claims 11 to 13.

37. A communication system, comprising the communication apparatus according to any one of claims 21 to 27, the communication apparatus according to any one of claims 28 to 30, and the communication apparatus according to any one of claims 31 to 33.
